# EUROPEAN PATENT APPLICATION

(11) **EP 1 445 454 A1**
(43) Date of publication of application: **11.08.2004**
(21) Application number: 03290310.6
(22) Date of filing: 07.02.2003
(51) Int. Cl.: F02D 41/00, F02B 29/04, F02M 31/04

(54) **Temperature control for an engine intake system**

(71) Applicant: Renault s.a.s., 92100 Boulogne Billancourt (FR)
(72) Inventor: Laik, Olivier, 78000 Versailles (FR); Lavagne d'Ortigue, Sabine, 78110 Le Vesinet (FR); Sermann, Olivier, 75016 Paris (FR)
(74) Representative: Davies, Owen Robert Treharne

(57) **Abstract**

A temperature control arrangement for an engine intake system is disclosed. The arrangement includes an air-to-air heat exchanger (26), preferably an intercooler supplied by a supercharger (20), having a first air flow path (P1) therethrough in a heat exchange relationship with a second air flow path (P2). The first air flow path is adapted to carry charge air (A_{c}) towards an intake port of an engine (10) and the second air flow path is adapted to carry cooling air (50) for cooling the charge air. The arrangement further comprises a flow control means (18, 54) that is adapted to control the flow of the cooling air (50) along the second air flow path (P2) so as to regulate the level of cooling provided to the charge air (A_{c}) in the heat exchange relationship

## Description

The present invention relates to temperature control for engine intake systems and in particular to engine intake system temperature control suitable for use in association with an exhaust gas after treatment arrangement.

It is known to provide an engine with exhaust gas after treatment and such an arrangement may include the provision of a catalytic converter and/or a particle filter. Some such arrangements at least partially rely on exhaust gases reaching and achieving a predetermined minimum temperature, for example for catalytic converter light-off or during a particle filter regeneration cycle. Under certain running conditions, however, the engine exhaust gases may not reach this temperature or may drop below it. This may occur in particular during low or medium load or slow speed running or may be affected by low ambient temperatures or wind chill. It is sometimes useful, therefore, to use strategies that raise the exhaust gas temperature beyond that it can achieve during normal running under the prevailing conditions.

In some systems, the exhaust gas temperature may be raised by secondary injection of fuel, as proposed for example in FR-2811370 or US-2002/0010152A1. These arrangements use extra fuel and may not be necessary or suitable for all situations of reduced exhaust temperature.

Another way of raising the exhaust gas temperature, that is not necessarily mutually exclusive with secondary-injection, is to actively control the temperature of charge air passing through an engine intake system. This may involve regulating intelligently the level of charge air cooling provided or even to increasing actively the temperature of the charge air. This controls the temperature of the charge air before it enters the cylinders and subsequently leads to exhaust gases exiting those cylinders at temperatures that can be regulated or at least influenced as a function of the control of the intake temperature and this is useful in emissions control.

In FR-2797660, an arrangement is proposed which attempts to control the temperature of intake air by the provision of an air-to-liquid heat exchanger in the charge air path upstream of a turbocharger and further has an air-to-air intercooler provided with charge air bypass and fitted downstream of the turbocharger. The air-to-liquid heat exchanger is included in an air filter assembly on the intake side of the turbocharger and is selectively supplied with coolant liquid from the engine cooling circuit. The charge air bypass facility for the intercooler is implemented using a by-pass duct and a pair of valves, one valve in each of the inlet and the outlet of the intercooler.

A further example of an intercooler bypass arrangement can be found in US-5036668, in which a single pivoting valve is controlled by an electromechanical actuator. The valve switches the charge air flow between two routes such that, in similar fashion to FR-2797660, the charge air either passes through the intercooler or bypasses it.

Providing a bypass for the charge air flowing through the intercooler requires the provision of a bypass structure and also physical and control means to divert that charge air. Its use may result in pulsation in the charge air supply downstream of the arrangement, e.g. during bypass valve operation implementing the diversion, which may affect the consistency of engine running or emissions. There may also be a propagation delay during changeover between charge air through-flow and bypass of the intercooler.

It is an object of the present invention to provide improved engine intake temperature control and in particular to provide improved engine intake temperature control suitable for use in association with an exhaust gas after treatment arrangement.

Accordingly, the present invention provides a temperature control arrangement for an engine intake system, the arrangement including an air-to-air heat exchanger, preferably an intercooler supplied by a supercharger, having a first air flow path therethrough in a heat exchange relationship with a second air flow path, said first air flow path being adapted to carry charge air towards an intake port of said engine and said second air flow path being adapted to carry cooling air for cooling said charge air, characterised in that said arrangement further comprises a flow control means that is adapted to control the flow of said cooling air through said second air flow path so as to regulate the level of cooling provided to said charge air in said heat exchange relationship.

This has the advantage of regulating the level of charge air cooling provided in the heat exchange relationship without disturbing the flow characteristics of the charge air being cooled as it passes through the intercooler, such as might otherwise occur if using a style of intercooler having a charge air by-pass.

Regulation of said level of cooling may include a restriction or substantial closure or by-pass of at least part of said second air flow path in order to promote an increase in the temperature of an exhaust gas flow from an exhaust port of said engine. Said regulation may be implemented as part of an exhaust gas after treatment arrangement. Said flow control means may include one or more valve means adapted to effect a said restriction or substantial closure or by-pass of said second air flow path.

Said flow control means may be adapted to regulate the flow of cooling air through said second air flow path as part of a particle filter regeneration arrangement.

Said flow control means may be adapted to regulate the flow of cooling air through said second air flow path as part of a catalytic converter temperature management arrangement.

Said flow control means may be adapted to regulate the flow of cooling air through said second air flow path at least partially on the basis of a substantially instantaneous temperature of a portion of said charge air flow or of a portion of an exhaust gas flow.

Said arrangement may further comprise a charge air heating arrangement for the addition of heat to said charge air from a source that is substantially independent of the instantaneous temperature of said charge air. Said source may comprise a liquid cooling circuit of said engine. The addition of said heat may be controllable substantially independently of the regulation of cooling air through said second flow path.

The flow of cooling air through said second flow path may be forced therethrough by an air propulsion means, for example by suction or blowing. Said air propulsion means may comprise part of, or be operably influenced by, said flow control means. Said propulsion means may comprise part of a heating and ventilating system or part of an engine bay or radiator cooling arrangement.

The present invention also provides a method of controlling the temperature of charge air entering an intake port of an engine, the method including:
a) providing an air-to-air heat exchanger, preferably an intercooler supplied by a supercharger, having a first air flow path for carrying charge air towards said intake port and a second air flow path for carrying cooling air used for cooling said charge air in a heat exchange relationship; and
b) regulating the level of cooling provided in said heat exchange relationship by selectively restricting or substantially closing or by-passing at least a part of said second air flow path.

The method may include regulating said level of charge air cooling so as to promote an increase in the temperature of an exhaust gas flow from said engine. The method may include implementing said regulation as part of an exhaust gas after treatment arrangement. The method may include effecting a said restriction, substantial closure or by-pass of said second air flow path using a valve means. The method may include regulating the flow of cooling air through said second air flow path as part of a particle filter regeneration arrangement. The method may include regulating the flow of cooling air through said second air flow path as part of a catalytic converter temperature management arrangement. The method may include regulating the flow of cooling air through said second air flow path on the basis of a substantially instantaneous temperature of a portion of said charge air flow or on the basis of a substantially instantaneous temperature of a portion of an exhaust gas flow of said engine. The method may include adding heat to said charge air from a source that is substantially independent of the instantaneous temperature of said charge air. The method may include adding said heat from a liquid cooling circuit of said engine, which may be implemented using an air-to-liquid heat exchanger. The method may include controlling the addition of said heat substantially independently of the regulation of cooling air through said second air flow path. The method may include forcing said cooling air through said second air flow path using a propulsion means, e.g. by blowing or sucking and preferably doing so under the influence of said flow control means.

The present invention also provides an article of manufacture comprising a computer storage medium having an executable computer program encoded thereon for controlling the temperature of charge air entering an intake port of an engine via an air-to-air heat exchanger, preferably an intercooler supplied by a supercharger, said heat exchanger having a first air flow path for carrying charge air towards said intake port and a second air flow path for carrying cooling air used for cooling said charge air in a heat exchange relationship, characterised in that said computer program includes code for regulating the level of cooling provided in said heat exchange relationship by controlling a flow control means used for selectively restricting or substantially closing or by-passing said second air flow path.

Said computer program may include code for implementing any of the further steps recited herein of the method of the present invention.

The present invention also provides a vehicle including an engine intake temperature control arrangement according to the present invention or including a control means adapted to operate using the method of the present invention or including an article of manufacture according to the present invention having encoded thereon a copy of the computer program of the present invention.

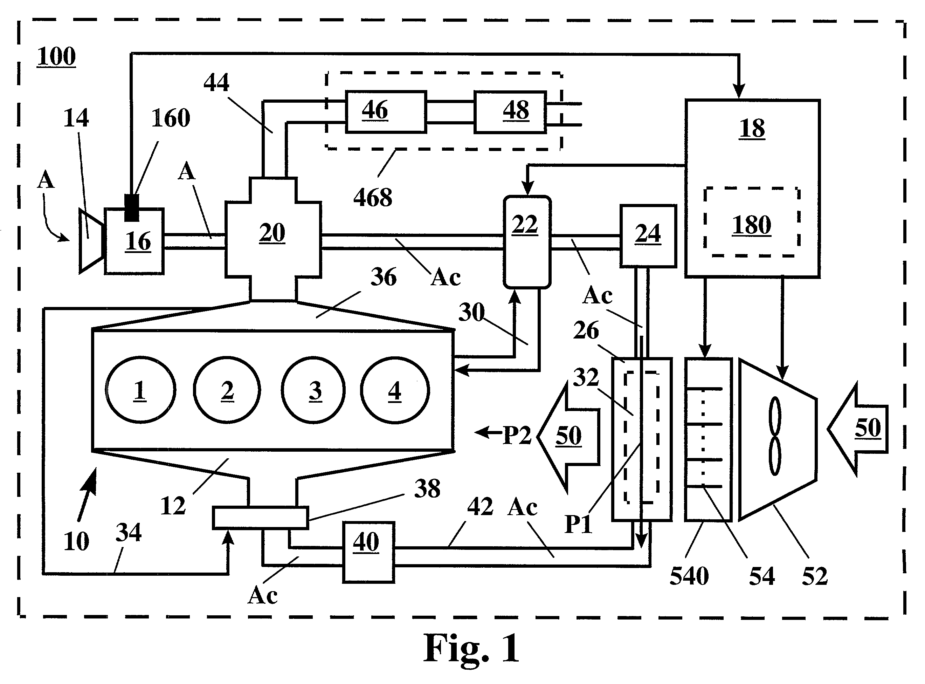

The present invention will now be described by way of example only and with reference to the accompanying drawing, in which Figure 1 is a schematic diagram of an embodiment of the present invention.

Referring to the Figure, a vehicle 100 includes an engine 10 that has an intake manifold 12 adapted to guide charge air A_{c} to intake ports of the engine cylinders (1, 2, 3, 4). The charge air A_{c} is initially inducted in an uncompressed form A from atmosphere through a filter assembly 14 and may optionally be collected using a ram effect during forward motion of the equipped vehicle 100. The incoming uncompressed charge air A passes through a charge air monitoring apparatus in the form of an air-flow meter 16. The air flow meter 16 includes an intake air temperature sensor 160, which is adapted to provide to a controller 18 a signal indicative of the temperature of the uncompressed charge air A passing through the air flow meter 16. From this signal, the controller 18 is adapted to obtain a direct measurement or a derived level of the substantially instantaneous temperature of at least a portion of the charge air A and/or ambient temperature. The controller 18 preferably operates under microprocessor control according to an executable computer program stored on a computer storage medium 180.

Downstream of the air flow meter 16, the uncompressed charge air A passes into the inlet of a supercharger, that is embodied in the non-limiting form of an exhaust gas driven turbo-charger 20. The charge air A is compressed by the turbo-charger 20 and the compressed charge air A_{c} exiting the turbo-charger 20 tends to be at a higher temperature than the uncompressed charge air A. After compression by the turbo-charger 20, the compressed charge air A_{c} is ducted through an air-to-liquid heat exchanger 22 and optionally through a resonator 24 into an air-to-air heat exchanger in the form of an intercooler 26.

The air-to-liquid heat exchanger 22 is supplied with cooling liquid 30 that is shared with a liquid cooling circuit of the engine 10 and circulation of that cooling liquid 30 through the air-to-liquid heat exchanger 22 is controlled by the controller 18 operating in accordance with the computer program stored in the memory means 180. This control may be implemented using one or more valves (none illustrated separately) and is used to regulate the flow rate of cooling liquid so as to control the temperature change effected on the compressed charge air A_{c} by way of the heat exchange relationship implemented via this heat exchanger 22. The effect provided may depend on operating or environmental conditions and may be an increase or a decrease in charge air temperature in dependence on the temperature of the cooling liquid 30 in or circulating through this heat exchanger 22.

The controller 18 may close off the flow of cooling liquid 30 to the air-to-liquid heat exchanger 22, for example in the case where the effect of liquid flow would have an effect opposite to that desired. In that case, however, the effect on charge air temperature of shutting off the liquid flow might be subject to a delay before being felt in the cylinders 1, 2, 3, 4 because of residual heating or cooling effects provided by fluid 30 remaining and static in the heat exchanger 22 after shutting off coolant liquid flow.

The optional resonator 24 may be located downstream of the air-to-liquid intercooler 22. The resonator 24 may take the form of a generally box-shaped silencer defining a resonator cavity tuned to suppress vibration of intake/charge air A_{c}. This helps keep down intake noise and may be achieved by causing air inside the resonator type silencer 24 to resonate in such a manner as to substantially cancel out resonance effects in the compressed charge air A_{c}.

From the resonator 24, the compressed charge air A_{c} moves into an inlet of the air-to-air intercooler 26. The compressed charge air A_{c} follows a first path P1 through the intercooler 26, which passes it through an air-to-air heat exchange matrix 32 and out of an intercooler outlet ducting it towards the inlet manifold 12. There is no by-pass used for charge air A_{c} and all the compressed charge air A_{c} follows this first path P1 through the intercooler heat exchange matrix 32. In this manner, there is substantially no disturbance to the flow of charge air A_{c} regardless of any variation to a heat exchange relationship between the matrix 32 and another medium. After leaving the intercooler 26, the compressed charge air A_{c} is ducted into the inlet manifold 12 and distributed between the inlet ports of the or each cylinder 1, 2, 3, 4.

Optionally, an exhaust gas recirculation system may be provided by which a portion of exhaust gas 34 is tapped off from an exhaust manifold 36, which manifold 36 may also support the turbo-charger 20. The exhaust gas 34 tapped off may be fed into the inlet manifold 12 under the control of an exhaust gas recirculation (EGR) valve 38, which may be in communication with the controller 18.

It may be found necessary to include a valve means for EGR dosing, such as a butterfly 40 in the intake ducting 42 upstream of the EGR valve 38. This is because some EGR valves 38 operate on the principle of a poppet valve which is opened and closed by a solenoid and relies on intake depression to draw in the recirculated exhaust gases 34. In the embodiment illustrated, the engine 10 comprises a turbo-charged engine and operates on the principle of positive pressure for forced induction. Such a butterfly valve 40 or its equivalent can then be used to at least partially close off the ducting 42 during an EGR operating phase so as to generate the necessary manifold depression.

The engine 10 may for example comprise a compression ignition engine or a spark ignition engine and is provided with an exhaust gas after-treatment arrangement. This may be in the form of an exhaust pipe 44 associated with a catalytic converter 46 positioned upstream of a particle filter 48. The inclusion of further exhaust gas after-treatment features such as NOx traps is not excluded, either as separate modules or integrated into either of the catalytic converter 46 and particle filter 48 which may themselves be integrated into a unit construction exhaust gas after treatment module 468.

Returning now to the intercooler 26, a second air flow path P2 is provided through the intercooler 26 and is used to conduct cooling air 50 through the intercooler 26 in such a manner that the cooling air 50 is in a heat exchange relationship with the charge air A_{c} passing along the first path P1, e.g. by passing that cooling air over and/or through the intercooler air-to-air heat exchange matrix 32. The first and second air flow paths P1, P2 are therefore in a heat exchange relationship in their respective passages through the intercooler 26.

The cooling air 50 may be collected from atmosphere, possibly using ram effect to maximise the volumetric flow rate and to force the cooling air 50 along the second air flow path P2 through the intercooler 26. The cooling air 50 may also be gathered and/or forced along the second air flow path P2 by an air propulsion means, such as a fan 52. The fan 52 may be arranged for suction or (as illustrated) for blowing and may be a dedicated fan 52 under direct control of the controller 18 or may be a fan used for other purposes in the vehicle 100, such as in a heating and ventilating system or as an engine bay or radiator cooling fan, in which case running of the fan 52 would preferably be at least in part operably influenced by the controller 18.

A flow restriction means is provided in the second air flow path P2 in the form of a valve assembly 540 including one or more valves 54, e.g. butterfly valves. The or each valve 54 is under the control of the controller 18 and is adapted to control the flow of the cooling air 50 along the second air flow path P2. In the event of using a single valve 54 in a simple embodiment, the flow control may comprise two positions "on" and "off" for an all-or-nothing approach to the heat exchange relationship across the intercooler 26. Intermediate positions may be introduced so as to regulate the heat exchange relationship in a greater number of steps.

In a more sophisticated arrangement, as illustrated, the valve assembly 540 may include a series of valves 54, e.g. in line abreast, so as to control the volumetric flow rate of cooling air along the second air flow path P2 in a variety of configurations. For example, by positioning the valves 54 in such a manner that each one regulates the flow of cooling air 50 through a specific portion of the matrix 32, the heat exchange relationship between the air flow paths P1, P2 may be regulated via substantially independent sections of the heat exchange matrix 32. Such control of the or each butterfly valve 54 is preferably combined with control of the fan 52, e.g. so as to reduce the pressure that might build up behind a closed butterfly valve 54 if cooling air 50 were still to be propelled towards it.

In Figure 1, the fan 52 is shown embodied in a form adapted to force cooling air 50 across/through the heat exchange matrix 32 by blowing, as indicated by the direction of the air flow arrows 50 and the arrow of the air flow path P2. In that case the valve assembly 540 is located downstream of the fan 52, and therefore in between the fan 52 and the intercooler 26 so as to be able to block the flow of cooling air 50 from reaching the matrix 32. In a variation to the invention, the propelling means, e.g. fan 52, may be located on a downstream side of the heat exchange matrix 32 and adapted to draw cooling air through the matrix 32 by suction. In that case, the valve assembly 540 would be located downstream of the matrix 32 but upstream of the fan 52 so as to separate the suction of the fan 52 from access to sucking cooling air 50 across the matrix 32. Such an arrangement can be illustrated by reversing in Figure 1 the direction arrows of the cooling air flow 50 and the second air flow path P2.

In a variation to the invention, it may be preferred to implement the flow control in the form of a by-pass for the cooling air 50. Such a by-pass may be implemented using for example one or more flap type valves so as to direct some or all the cooling air along a by-pass, rather than shutting off its access to the second air flow path P2. This may be considered a reverse arrangement to the conventionally known one in which it is the charge air that is sent along a by-pass. Such a cooling air 50 by-pass arrangement would still have the same effect by cutting off or regulating the heat exchange relationship across the intercooler 26.

In use, the controller 18 uses the valve assembly 540 to implement a method of controlling the flow of cooling air 50 along the second air flow path P2. The method is implemented by executing the code in the computer program stored on the storage medium 180. It is the flow of cooling air 50 along the second air flow path P2 that is controlled, rather than flow rate of the compressed charge air A_{c} along the first air flow path P1 through the intercooler heat exchange matrix 32. In not using a by-pass for the charge air A_{c}, all the charge air A_{c} passes through that heat exchange matrix 32 and the flow P1 is not interrupted or subject to pulsation downstream of the resonator 24, as might otherwise occur if charge air A_{c} by-passes the matrix 32.

The level of regulation of the heat exchange relationship that is available to the controller 18 will depend on the level of sophistication used in implementing the valve assembly 540, e.g. number and configuration of the or each valve 54, but will generally vary between full heat exchange and substantially completely cutting out the removal of heat from the charge air A_{c} by restricting or substantially closing the second air flow path P2 through the heat exchange matrix 32 or by by-passing the cooling air 50 around that matrix 32.

The regulation of the intake air temperature through regulation of the heat exchange relationship between the two air flow paths P1, P2 across the intercooler matrix 32 is preferably performed as part of an exhaust gas after-treatment strategy. Such a strategy may be implemented to regulate the temperature of exhaust gases exiting an exhaust port of the engine 10. For example, if the temperature of the catalytic converter 46 has not yet reached or drops or risks dropping below its light-off temperature, it may be desirable to try and raise the exhaust gas temperature so as to help it reach, maintain or regain that light-off temperature. In similar fashion, a regeneration cycle of the particle filter 48 may also warrant a raised exhaust gas temperature so as to enable, initiate, maintain or otherwise ensure a hopefully successful implementation of the particle filter regeneration cycle.

The air-to-liquid heat exchanger 22 may also be used as an air heater arrangement for positively adding heat to the compressed charge air A_{c}. The level that can be added by the air heater arrangement 22 depends on the heat available from the cooling liquid 30. The addition of heat from this source may be useful as it is substantially independent of the instantaneous temperature of the air A initially entering the engine 10, i.e. passing through the air flow meter 16. The control of air heating or cooling by the air-to-liquid heat exchanger 22 is preferably implemented in a manner that is structurally substantially independent of the regulation provided to the heat exchange relationship P1, P2 across the intercooler 26, so as to increase the flexibility of the temperature control applied to the intake system. The addition or removal of heat using the air-to-liquid heat exchanger 22, however, may suffer from a propagation delay in getting heat into the water or getting it out as the case may be. The heat transfer is dependent on the liquid temperature actually being higher than that of the charge air A_{c}.

Regulating the cooling air flow 50 across the intercooler heat exchange matrix 32 has the advantage of taking effect substantially immediately but without suffering the pulsations of charge air A_{c} by-pass or the extra fuel consumption of additional fuel injection cycles. It is also independent of the cooling fluid temperature and is available all the time. It does not cost anything as the heat is already in the charge air A_{c} as a result of its compression by the turbo-charger 20. The arrangement of the present invention leaves that heat in place by removing the source of heat removal and does so advantageously without disturbing the flow of charge air A_{c}, disturbance to the flow of cooling air 50 being of significantly less importance.

The delay to raising the exhaust gas temperature may be minimised by using the signal from the intake air temperature sensor 160, as this can be compared to for example a mapped relationship in the controller/software combination 18,180. The mapped relationship can be used to implement regulation of the cooling air flow P2 possibly before the exhaust gas temperature has dropped much or in advance anticipation of the necessity during the build up to a catalyst temperature management cycle or particle filter regeneration cycle.

A signal directly indicative of exhaust gas temperatures may be used in addition or instead of the intake air temperature signal, e.g. the gas temperature at or downstream of the exhaust ports, exiting the catalytic converter 46 or particle filter 48 or from an exhaust gas composition or temperature sensor (non illustrated). It may prove best to sense exhaust gas temperature upstream of the turbo-charger 20, e.g. so as to get the most direct feedback of exactly what the effects are on exhaust gas temperature of regulation being performed on the temperature of the intake air. Further additional or alternative control signals for the valve assembly 540 may comprise signals indicative of engine load and/or running conditions of the engine/vehicle, e.g. a torque signal, engine speed, coolant temperature, ambient pressure and/or ambient air temperature.

The present invention is particularly useful to combat drops in exhaust gas temperature during low speed running or low load and medium loading of the engine 10. Taking by way of a specific, but non-limiting, example of a particle filter regeneration cycle, the following strategy might be implemented. The example would be the preferred operating strategy for a regeneration cycle of particle filter associated with an engine 10 embodied as a compression ignition engine, e.g. diesel, but may also be found useful for a spark ignition engine such as a direct injection petrol engine.
1) If the engine is at high load, then the air-to-liquid heat exchanger 22 is not filled with hot liquid. If possible, it is filled with cool liquid or otherwise left shut-off such that passing charge air cools down the liquid that stays in there. Any and all valves 54 may be wide open so as to maximise the heat exchange relationship between the air flow paths across/through the intercooler matrix 32. This is the preferred operating condition for particle filter regeneration.
2) If the engine is at low or medium load or at low speed running in some cases and a regeneration cycle in under way or needs to start, the or each valve 54 is actively regulated, e.g. fully or partially closed, and hot liquid 30 from the engine cooling circuit is preferably directed by the controller 18 to flow through the air-to-liquid heat exchanger 22.
3) Control of active heat input to the charge air A_{c} by the air-to-liquid heat exchanger 22 may be controlled substantially independently of the regulation of cooling air 50 through the second air flow path P2.
4) Valve closure may be full or partial.

Thus the present invention provides an arrangement for controlling the temperature of intake air of an engine in an improved, cost-effective and environmentally friendly manner that is suitable for application using existing technology and readily applicable to current vehicles in the strive to keep down harmful emissions. Such intake temperature control is particularly useful for influencing exhaust gas temperatures.

The present invention has been described by way of example only with respect to a supercharged engine, but it will be appreciated that the arrangement specifically disclosed may be modified by the removal of the supercharger such that it can be applied to a naturally aspirated engine. It will also be noted that the air-to-liquid heat exchanger 22 may be found to be only optional and not essential in some embodiments, both supercharged and naturally aspirated. If used, such an air-to-liquid heat exchanger 22 is not limited to a position upstream of the air-to-air heat exchanger 26 and an air-to-liquid heat exchanger may be placed downstream thereof.

## Claims

1. A temperature control arrangement for an engine intake, the arrangement including an air-to-air heat exchanger (26), preferably an intercooler supplied by a supercharger (20), having a first air flow path (P1) therethrough in a heat exchange relationship with a second air flow path (P2), said first air flow path being adapted to carry charge air (A_{c}) towards an intake port of an engine (10) and said second air flow path being adapted to carry cooling air (50) for cooling said charge air, **characterised in that** said arrangement further comprises a flow control means (18, 54) that is adapted to control the flow of said cooling air (50) along said second air flow path (P2) so as to regulate the level of cooling provided to said charge air (A_{c}) in said heat exchange relationship.

2. An arrangement according to claim 1, wherein regulation of said level of cooling includes a restriction or substantial closure or by-pass of at least part of said second air flow path (P2) in order to promote an increase in the temperature of an exhaust gas flow (44) from an exhaust port of said engine (10), said regulation preferably being implemented as part of an exhaust gas after treatment arrangement (46, 48) and said flow control means preferably including one or more valve means (54) adapted to effect a said restriction or substantial closure or by-pass of said second air flow path.

3. An arrangement according to claim 1 or claim 2, wherein said flow control means (18, 54) is adapted to regulate the flow of cooling air (50) through said second air flow path (P2) as part of a particle filter (48) regeneration arrangement.

4. An arrangement according to any preceding claim, wherein said flow control means (18, 54) is adapted to regulate the flow of cooling air (50) through said second air flow path (P2) as part of a catalytic converter (46) temperature management arrangement.

5. An arrangement according to any preceding claim, wherein said flow control means (18, 54) is adapted to regulate the flow of cooling air (50) through said second air flow path (P2) at least partially on the basis of a substantially instantaneous temperature (160) of a portion of said charge air flow (A) or of a portion of an exhaust gas flow.

6. An arrangement according to any preceding claim, further comprising a charge air heating arrangement (22) for the addition of heat to said charge air (A_{c}) from a source that is substantially independent of the instantaneous temperature (160) of said charge air, such as from a liquid cooling circuit (30) of said engine (10), the addition of said heat preferably being controllable substantially independently of the regulation of cooling air (50) through said second air flow path (P2).

7. An arrangement according to any preceding claim, wherein the flow of cooling air (50) through said second air flow path (P2) is forced therethrough by an air propulsion means (52), for example by suction or blowing, and said air propulsion means preferably comprising part of or being operably influenced by said flow control means (18, 54).

8. A method of controlling the temperature of charge air (A_{c}) entering an intake port of an engine (10), the method including:
a) providing an air-to-air heat exchanger (26), preferably an intercooler supplied by a supercharger (20), having a first air flow path (P1) for carrying charge air towards said intake port and a second air flow path (P2) for carrying cooling air (50) used for cooling said charge air in a heat exchange relationship; and
b) regulating the level of cooling provided in said heat exchange relationship by selectively restricting or substantially closing or by-passing said second air flow path.

9. An article of manufacture comprising a computer storage medium (180) having an executable computer program encoded thereon for controlling the temperature of charge air (A_{c}) entering an intake port of an engine (10) via an air-to-air heat exchanger (26), preferably an intercooler supplied by a supercharger (20), said heat exchanger having a first air flow path (P1) for carrying charge air towards said intake port and a second air flow path (P2) for carrying cooling air (50) used for cooling said charge air in a heat exchange relationship, **characterised in that** said computer program includes code for regulating the level of cooling provided in said heat exchange relationship by controlling a flow control means (18, 54) used for selectively restricting or substantially closing or by-passing said second air flow path (P2).

10. A vehicle (100) including a temperature control arrangement according to any one of claims 1 to 7 or including a control means (18, 54) adapted to operate using the method of claim 8 or including an article of manufacture (180) according to claim 9.
